# EUROPEAN PATENT APPLICATION

(11) **EP 2 378 702 A2**
(43) Date of publication of application: **19.10.2011**
(21) Application number: 11275061.7
(22) Date of filing: 12.04.2011
(51) Int. Cl.: H04L 5/00

(54) **Allocating traffic in multi-carrier systems in shared networks**

(30) Priority: 14.04.2010 ES 201030540
(71) Applicant: Vodafone Group PLC, Newbury Berkshire RG14 2FN (GB); Vodafone España, S.A.U., 28108 Alcobendas (ES)
(72) Inventor: De Pasquale, Andrea, E-28050 Madrid (ES); Dominguez Romero, Francisco, E-28050 Madrid (ES); Le Pezennec, Yannick, E-28050 Madrid (ES)
(74) Representative: Keston, David Arthur

(57) **Abstract**

Method and UTRAN entity providing traffic allocation for multi-carrier transmission in RAN sharing, wherein each operator from the plurality of mobile network operators uses a primary carrier over which signalling and traffic is carried and can use the other carriers as non-dedicated extension carriers for at least some users during some time, when resources are available on these extension carriers. In Dual Cell with two Operators, the calls from User Equipments (UE1 ) of an operator A are setup on its assigned primary carrier 1 at a frequency band f1, while another operator B has another carrier operating at a frequency band f2 dedicated to allocate calls from the User Equipments (UE2, UE3) of operator B. An extension carrier 2 at f2 with capacity extension assigned to Dual Cell users from operator A can be the one used by operator B as its primary carrier to allocate signalling and traffic.

## Description

### DESCRIPTION

### TECHNICAL FIELD OF THE INVENTION

The present invention has its application within the telecommunications sector and, especially, in the industrial area engaged in providing Third Generation (3G) network entities (radio network controllers and base stations/node Bs) with scheduling means for traffic allocation and policies control of the different user equipments (UEs) in the Radio Access Network (RAN) of wireless communications systems.

More specifically, it relates to a method and network entity for allocating traffic in multi-carrier and multi-cell communications in wireless systems supporting HSPA (High Speed Packet Access) technologies defined by the 3G Partnership Project (3GPP) Release 8 and onwards when networks are shared among two or more operators.

### BACKGROUND OF THE INVENTION

Third generation (3G) evolution of cellular telecommunications leads to the provision of increasingly high peak rates to the end user. To address this, one identified technique is the simultaneous transmission of data over multiple (High Speed Downlink Packet Access) HSDPA carriers for one User Equipment (UE) as defined by the 3GPP from Release 8 and referred to as Dual Cell HSDPA. HSDPA is a packet-based data system, evolved from (and backward compatible with) Release 99 (Rel'99) WCDMA systems which provides high-speed data transmission (up to 8-10 Mbps over a 5MHz bandwidth) to support multimedia services.

The evolution of HSDPA towards a higher throughput and lower latencies requires improvements to the physical layer, as well as the architecture. One improvement is the use of a Dual Cell-High Speed Downlink Packet Access (DC-HSDPA) to increase the downlink (DL) capacity and to support hot spot packet-switched (PS) data activities. DC-HSDPA provides capabilities to support peak rates up to 43.6 Mbps (aggregation of 2 HSDPA carriers each one with 64QAM modulation capability) which is further enhanced in follow-up 3GPP releases by making use of DC-HSDPA with MIMO in Release 9 and by further carrier aggregation capabilities (e.g. up to 4 carriers in Release10).

In DC-HSDPA, the dual cell operation applies to the high-speed downlink shared channel (HS-DSCH). DC introduces the capability in the system to transmit and receive data over two HS-DSCH connections conveyed over two contiguous carriers. In addition, the two cells aggregated with the DC-HSDPA functionality are associated with a single base station (BS) and operate on two contiguous (adjacent) carriers. For example, one cell operates as anchor carrier (also known as primary carrier) and the other cell operates as an extension carrier (also known as secondary carrier), being both carriers (primary carrier and extension carrier) transmitted by the same BS. The same mechanism is used when carrier aggregation is done on more than two carriers; the second or the third or the fourth cell can operate as an extension carrier.

The "primary or anchor carrier" is the carrier which has an associated High Speed Uplink Packet Access (HSUPA) connection. Indeed in Release 8 the aggregation of two contiguous carriers is only supported in the downlink direction, hence on the uplink only a single carrier connection HSUPA connection is possible. Dual Cell HSUPA support is introduced in 3GPP Release 9.

DC-HSDPA is especially good at exploiting the available capacity over different carriers by sending on each Transmission Time Interval (TTI) the data over the best carrier or simultaneously over different carriers at the same time reusing all remaining HSDPA codes available. The availability of two or more carriers per operator (MNO) can however have substantial cost in terms of hardware and software and such a cost can be prohibitive for RAN Sharing scenarios. As an example, the deployment of Dual Cell HSPA in a two-operator RAN Sharing scenario requires the installation of a large configuration in terms of RF power per sector in order to support four carriers. However, such a cost is not justified if the average carrier occupancy is low even if the peak rate is very high.

On the other hand, a carrier sharing technique used in some RAN sharing scenarios called Multiple Operator Core Network (MOCN), standardized by the 3GPP Release 6 (TS 23.251 "Network Sharing; Architecture and functional description") can also be used, but it has the drawback that the display of the correct network identifier is not guaranteed unless a specific feature is supported by the terminals because MOCN is a pooled spectrum approach and so the radio resources (UMTS cells) are common for all the operators (there is a single shared carrier for each sector). Hence using the MOCN approach by having a fully common Dual Cell pool to allow the introduction of DC might not be viable for an operator.

This calls for a solution in order to implement Dual Cell or Multiple Carrier transmission in RAN Sharing networks with multiple MNOs using dedicated carriers by smartly "sharing" the carriers of the same sector across different operators, whilst maintaining the transmission of the PLMN-ld by each MNO on each of its "dedicated" carriers.

### SUMMARY OF THE INVENTION

The present invention serves to solve the aforesaid problem by providing means for scheduling and allocating traffic for multi-carrier transmission in RAN sharing systems with multiple mobile network operators, by smartly "sharing" the carriers of the same sector across different operators, whilst maintaining the transmission of the PLMN-Id by each operator on each of its primary carriers. In these systems each mobile network operator (MNO) uses a first dedicated radio carrier as its primary carrier (anchor carrier) where all common channels, UL traffic and signalling towards the UEs of a MNO are carried. In addition, each MNO can use a second or more carriers as dedicated extension carrier. Thus, each MNO has one or more dedicated carriers: one is the primary carrier and, additionally, there can be one or more dedicated extension carriers. Optionally, a MNO can use the remaining (not dedicated) carriers (which are neither primary nor dedicated extension carriers of the MNO in the multi-carrier system) as non-dedicated HSPA extension carriers. These non-dedicated extension carriers are additional capacity for allocating to the user plane of specific users during specific moments of time, i.e. when some remaining HSPA resources are still available on those carriers. Said non-dedicated carriers of a certain MNO are usually dedicated (primary or extension carriers) of the other MNOs.

Some examples of possible multi-carrier multi-operator scenarios are the following:
two carriers (F1, F2) and two operators:
   - F1 is dedicated (primary) carrier to Operator A, F2 is dedicated (primary carrier) to Operator B.
three carriers (F1, F2, F3) and two operators:
   - F1 and F2 are carriers dedicated to operator A, F3 is dedicated to operator B; F2 is not only an extension (dedicated) carrier for Operator A but also is an extension non-dedicated for operator B
   - F1 is dedicated (primary carrier) to operator A, F3 dedicated (primary carrier) to operator B and F2 is an extension non-dedicated carrier to both operators A and B

This means that over a specific carrier, packets of several or all the sharing operators can be carried and it's therefore important to ensure that the usage of the primary or dedicated extension carrier of operator A by Multicarrier capable UEs (e.g. DC-HSDPA UE of 3GPP Release 8) from an operator B does not undermine the available capacity for operator A over its primary or dedicated extension carrier, since said primary or dedicated extension carrier from operator A is a non-dedicated extension carrier for operator B.

Thus, Dual Cell and, in general, Multicarrier functionalities can be enabled on RAN sharing areas without the need of deploying extra carriers and extra equipment.

An aspect of the invention deals with a method for allocating traffic among a plurality of radio carriers, which are available for multiple mobile network operators (MNOs) having a primary carrier for each MNO for allocation of traffic and common channels of the MNO and at least one extension carrier for user plane traffic allocation for certain users of the MNO and for certain time. The method determines whether at least one carrier (primary or dedicated extension) of any MNO, other than a certain MNO (MNO B), has capacity to carry traffic of at least said MNO B and, if so, at least part of the traffic of the MNO B is allocated to a suitable carrier of any other MNO, becoming a non-dedicated extension carrier of the MNO B. A carrier is suitable as an extension carrier if fulfilling the Multi-Carrier capabilities of the UE. For example in 3GPP Rel'8 the Multi-Carrier UE can only operate on 2 contiguous carriers, hence only a "neighbour" carrier (contiguous to the primary carrier) is suitable.

In order to determine whether any suitable carrier that is dedicated to any other MNO (e.g. MNO A) has the capacity to carry traffic of the MNO B, the traffic load of such a carrier is measured and averaged during a configurable time period to compare it with a predefined threshold. If the value of load is lower than a predefined threshold, at least part of the traffic of the MNO B is scheduled in the carrier that is dedicated to MNO A, i.e., such a carrier constitutes a non-dedicated extension carrier of the MNO B.

Another possibility to determine whether any suitable carrier dedicated to any other MNO (e.g. MNO A) can be used as a non-dedicated extension carrier of a MNO B consists of checking, for every transmission time interval, whether there are free channelization codes for users in this TTI after all the traffic of users belonging to the MNO A is scheduled. If no more user traffic of the MNO A is to be scheduled in the TTI and there are free codes, traffic of the MNO B is allocated to the carrier of the MNO A in said TTI using the free channelization codes.

The proposed method for allocating traffic in multi-carrier systems also can determine whether the dedicated carrier (primary or extension) of the MNO A has capacity to carry traffic of at least one MNO B and, if so, allocating user plane traffic of certain users belonging to the MNO B to said carrier of the other MNO (MNO A) during determined time instants. For determining whether the dedicated carrier of the MNO A can carry traffic of other mobile network operator, an average value of the dedicated carrier load can be measured and compared with a predefined threshold to decide whether traffic of certain users of the MNO B can be scheduled in the dedicated carrier of the MNO A (i.e., the primary or the dedicated extension carrier of the MNO A constitutes a suitable non-dedicated extension carrier of the MNO B). Instead of carrier load checking, the method can determine whether no user traffic of the MNO A is to be scheduled in the TTI and there are free channelization codes and, if so, the dedicated (primary or extension) carrier of the MNO A allocates additional capacity to user traffic of the MNO B for at least some of the users and during determined time periods.

When scheduling traffic of the MNO B in the carriers which originally belongs to the MNO A, a QoS priority for scheduling said traffic of the MNO B can be assigned with a lower value than the priority scheduling parameter for traffic of the MNO A.

Another aspect of the invention deals with a network entity which comprises processing means for performing the method described before. In the classic Radio Access Network (RAN) architecture of 3GPP UMTS specifications Releases 99 and 4, the network entity is implemented in a Radio Network Controller (RNC). For Release 5 and beyond, the RAN can be based on a flat architecture (Collapsed Architecture) for the packet switching (PS) domain and no RNC nodes are required in the network, so the proposed network entity can be a HSPA Node B, an evolved HSPA Node B or an eNode B in LTE.

A further aspect of the invention deals with a computer program comprising program code means which execute the method described before, when loaded into processing means of the network entity defined above.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

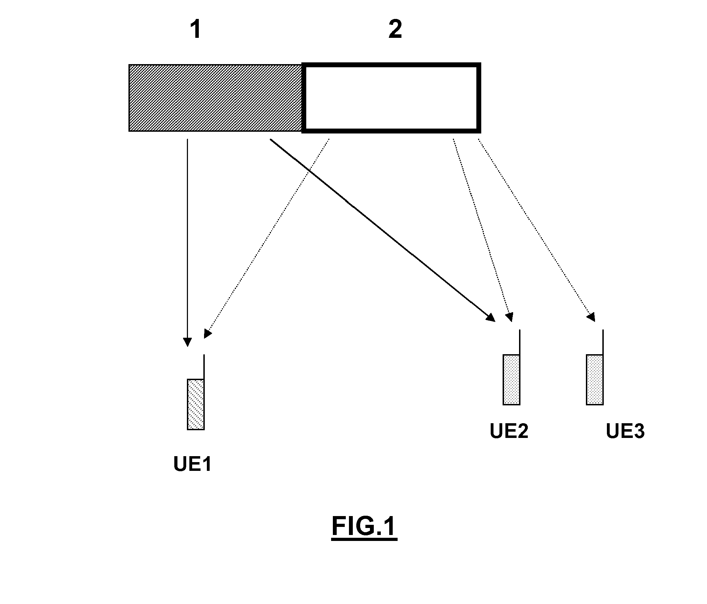

Figure 1. - It shows a Dual Cell scenario with two Sharing Operators and the allocation of traffic from different User Equipments of the two Operators, according to a preferred embodiment of the invention.

### DETAILED DESCRIPTION OF THE INVENTION

Figure 1 shows the case of Dual Cell and two Sharing Operators in a HSPA radio access network. The HSPA calls from User Equipments (UE1 ) of an operator A, with an identifier of mobile network PLMN-ld A assigned, are setup on the primary carrier 1 assigned to operator A operating at a frequency band f1. Similarly, another operator, operator B with an identifier of mobile network PLMN-ld B, has also a primary carrier, operating at a frequency band f2, assigned to allocate call setups from the User Equipments (UE2, UE3) of operator B. The primary carrier of an operator carries the UL traffic in order to not affect the UL load between operators. In Figure 1, an example implementation of the invention is illustrated, where the User Equipment UE1 of operator A and the User Equipment UE2 of operator B are using Dual Cell, while another User Equipment UE3 of operator B is using a single carrier, which is the primary carrier of operator B. In the sharing approach proposed, an additional carrier 2 at frequency band f2 with capacity extension assigned to Dual Cell users from operator A is the one used by operator B as its primary carrier to allocate the signalling and UL traffic.

Several mechanisms can be used in order to identify when the carrier(s) of another operator can be used as an extension carrier for is Dual Cell users:
For example, a simple method which can be used to determine whether a dedicated carrier can be used by another operator is to enable the use of this as a non-dedicated extension carrier to another operator based on the load of this carrier i.e. beyond a certain level of load on its dedicated carrier the operator might not authorize the other operator to use this carrier as a non-dedicated extension carrier.

For the Dual Cell case, the traffic allocation means of the network entity serving the users from operator B, e.g., an HSPA scheduler at Node B, can use the carrier resources of the operator A, i.e., code tree and transmission power, as long as during a period the load on the additional carrier, caused by another operator, is on average lower than a predefined threshold.

Then, some different options can be used to carry the additional DC traffic of the operator B jointly with the traffic of operator A:
i) QoS based mechanism:
   In a carrier, the packets that are coming from the other operator using the carrier as a non-dedicated extension carrier are considered by the scheduler with a lower priority than any other packet in the scheduler for this carrier. This lower priority can be set by assigning on a given carrier the packets from users of the other operator with a lower weight compared with the users of the operator for which this carrier is the primary carrier. This means that the scheduler supporting the Dual Cell operation in sharing mode is able to treat separately the packets from the user scheduled on the primary carrier from the one scheduled on the secondary carrier.
ii) Based on free Transmission Time Intervals - TTls- and/or free codes in a TTI:
   The UE of the other operator (UE2) using Dual Cell gets packets scheduled in the primary carrier of the operator A as an additional carrier only if there are no UEs of operator A to be scheduled in that TTI, or if there are free codes in a TTI after having scheduled all user(s) of operator A. That means there is absolute priority of the operator A packets over the operator B packets in the primary carrier of the operator A.

All this mechanism can be applied for any Multi-Carrier case, including the two, three or four-carrier scenarios described respectively in Releases 8, 9 and 10 by 3GPP, and all in the same band or in different frequency bands.

When more than one additional carrier are available for an operator, and in case that the 3GPP allows Multicarrier operation on non adjacent carriers (for current 3GPP Releases 8 and 9, Multicarrier operation is applied only on adjacent carriers, and so the following proposal for carrier selection does not apply) one or more of these carriers, depending on the network configuration, can be used by the other operators. Some examples are:
- Two sharing operators, Operator A and Operator B, and two carriers for Operator A and one carrier for Operator B:
   a) In this case, if Dual Cell is used, the non-dedicated extension carrier can be selected based on several criteria, like, e.g.:
      - a predetermined carrier for all the UEs of Operator B setting up a Dual Cell call,
      - the carrier that is less loaded on a specific moment in time when the Dual Cell call for a UE of Operator B is set-up.
- Three Sharing Operators: one carrier is allocated with expansion capacity for each operator. Thus, if Dual Cell is used, same criteria as above can be used for selecting the non-dedicated extension carrier:
   - a predetermined carrier for every Operator setting up a Dual Cell call,
   - the carrier that is less loaded on a specific moment in time when the Dual Cell call for a UE of an Operator is set-up.

The same mechanisms as above are used in order to select the TTIs in which packets for the UEs of one Operator can be transmitted over the additional carrier (i and ii).

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for allocating traffic in multi-carrier systems, wherein multiple radio carriers have available bandwidth for a plurality of mobile network operators and, for each mobile network operator, a dedicated primary carrier is allocated for user plane traffic and common channels assigned to said mobile network operator and at least one extension carrier is allocated to user plane traffic of certain multi-carrier users and during determined time instants specified by said mobile network operator, the method **characterized by** determining whether at least one carrier of another mobile network operator A has capacity to carry additional traffic of at least a certain mobile network operator B different from mobile network operator A and, if so, allocating at least part of the available bandwidth of said carrier to the mobile network operator B.

2. The method according to claim 1, wherein the step of determining whether at least one carrier of the mobile network operator A has capacity to carry additional traffic comprises comparing a value of load, measured on said at least one carrier and averaged during a configurable time period, with a predefined threshold and, if the value of load is lower than the predefined threshold, at least part of the traffic of the mobile network operator B is scheduled in a dedicated carrier of the mobile network operator A.

3. The method according to claim 2, wherein the step of scheduling traffic of the mobile network operator B in a dedicated carrier of the mobile network operator A comprises checking, for every transmission time interval, whether there is free channelization codes after the traffic of users belonging to the mobile network operator A is scheduled, and if so, allocating at least part of the bandwidth of the carrier to the mobile network operator B using the free channelization codes.

4. The method according to any of claims 2 and 3, wherein the step of scheduling traffic of the mobile network operator B in the dedicated carrier of the mobile network operator A comprises assigning said traffic of the mobile network operator B with a QoS scheduling parameter indicating a priority for scheduling said traffic lower than the priority for scheduling traffic of the mobile network operator A.

5. The method according to any previous claim, further comprising determining whether the dedicated carrier of a mobile network operator A has capacity to allocate traffic of at least one mobile network operator B and, if so, allocating user plane traffic of certain users belonging to said mobile network operator B and during determined time instants to a dedicated carrier of the mobile network operator A.

6. The method according to claim 5, wherein the step of determining whether the dedicated carrier of a mobile network operator A has capacity to allocate traffic of a mobile network operator B comprises comparing a value of load, measured on the dedicated carrier of the mobile network operator A and averaged during a configurable time period, with a predefined threshold and, if the value of load is lower than the predefined threshold, traffic of certain users of the mobile network operator B is scheduling in the dedicated carrier of the mobile network operator A.

7. The method according to claim 6, wherein the step of scheduling traffic of the mobile network operator B in the dedicated carrier of the mobile network operator A comprises checking, for every transmission time interval, whether there is free channelization codes after the traffic of users belonging to the mobile network operator A is scheduled, and if so, allocating traffic of certain users of the mobile network operator B using the free channelization codes of a dedicated carrier of the mobile network operator A during determined time instants.

8. The method according to any of claims 6-7, wherein the step of scheduling traffic of certain users belonging to the mobile network operator B in a dedicated carrier of the mobile network operator B comprises assigning said traffic of the mobile network operator B with a QoS scheduling parameter indicating a priority for scheduling said traffic lower than the priority for scheduling traffic of the mobile network operator A.

9. A network entity **characterized by** comprising processing means configured to implement the method set out in any previous claim.

10. The network entity according to claim 9 which is selected from a RNC, a HSPA Node B, an eHSPA Node B and an eNode B.

11. A computer program product comprising program code means which, when loaded into the processing means of a network entity selected from a RNC, a HSPA Node B, an eHSPA Node B and an eNode B, make said program code means execute the method according to any of claims 1-8.
